**Europäisches Patentamt**

**European Patent Office**

**Office européen des brevets**

(19)

(11) Veröffentlichungsnummer: **0 062 272**
**B1**

(12)

# EUROPÄISCHE PATENTSCHRIFT

(45) Veröffentlichungstag der Patentschrift:
**03.08.88**

(51) Int. Cl.⁴: **G 01 B 17/02,** G 01 S 15/34

(21) Anmeldenummer: **82102624.2**

(22) Anmeldetag: **29.03.82**

(54) Verfahren und Vorrichtung zur Dickenkontrolle bzw. -messung von Materialschichten.

(30) Priorität: **01.04.81 DE 3113025**

(43) Veröffentlichungstag der Anmeldung:
**13.10.82 Patentblatt 82/41**

(45) Bekanntmachung des Hinweises auf die Patenterteilung:
**03.08.88 Patentblatt 88/31**

(84) Benannte Vertragsstaaten:
**BE DE FR GB IT SE**

(56) Entgegenhaltungen:
**DE - C - 1 190 845**
**US - A - 3 140 461**
**US - A - 3 148 536**

**ELEKTRONIKER, Band 25, Nr.5, 1976, O. MÜLLER:"Der Hochfrequenz-Spektrumanalysator als Messgerät in der Ultraschallresonanztechnik", Seiten 20-24**

(73) Patentinhaber: **Battelle-Institut e.V., Am Römerhof 35 Postfach 900 160,**
**D-6000 Frankfurt/Main 90 (DE)**

(72) Erfinder: **Beuter, Karl, Dr., Oberlindau 98,**
**D-6000 Frankfurt/Main (DE)**

# Beschreibung

Die Erfindung betrifft ein Verfahren zur Dickenkontrolle und -messung von einseitig oder nicht von aussen zugänglichen Materialschichten gemäss Oberbegriff des Anspruchs 1 sowie eine Vorrichtung zur Ausführung des Verfahrens mit einem aus einem elektroakustischen Sende- und Empfangswandler bestehenden Prüfkopf gemäss Oberbegriff des Anspruchs 3.

Derartige Verfahren sowie Vorrichtungen zu ihrer Ausführung sind – abgesehen von den beiden angegebenen Alternativen: «Dickenmessungen an von aussen unzugänglichen Materialschichten» und «akustische Anzeige des Demodulations-Signals» – aus Elektroniker Jg. 25, Nr. 5/1976, Seiten EL 20–24 bekannt.

Die Schichtdickenmessung ist zur Kontrolle von Belagstärken, wie Schutzschichten, Ablagerungen, von Korrosion oder Rohrstärken, für Tiefenbestimmungen und viele andere Anwendungen erforderlich. Hierfür sind optische, elektrische und magnetische Methoden bekannt, die auf bestimmte Materialien begrenzt sind und häufig für unzu-gängliche oberflächenferne Schichten nicht ein-gesetzt werden können.

Die berührungslose und störungsfreie Prüfung mit Ultraschall erlaubt es, auch von aussen unzugängliche Bereiche eines Werkstücks zu untersuchen. Ultraschalldickenmessungen nach dem Laufzeitverfahren mit der Impuls-Echo-Technik können mit handelsüblichen Geräten durchgeführt werden. Wenn die Schichtdicken aber so gering sind, dass sich die Echos von Schichtober- und -unterseite zu einem zeitlich nicht auflösbaren resultierenden Signal überlagern, versagt das herkömmliche Laufzeitverfahren. Für diesen Fall wurden schon Frequenzanalyseverfahren eingesetzt, bei denen aus dem Spektrum des resultierenden Signals die Schichtdicke bestimmt wurde. Wegen der nicht beliebig kleinen Impulsdauer ist die Laufzeitmethode nur für relativ dicke Schichten anwendbar; das Spektrum-Verfahren ist überdies rechenintensiv und damit aufwendig in der Benutzung.

Ferner sind allgemein Ultraschalldickenmessgeräte bekannt, die mit einem Schallgeber und einem HF-Generator ausgerüstet sind, dessen Frequenz kontinuierlich in bestimmten Bereichen geändert wird. Dabei werden die Frequenzen, bei denen Resonanz auftritt, gemessen und daraus die Schichtdicke bestimmt. Durch Modulation der Schwingungen wird erreicht, dass bei Resonanz in einem Kopfhörer ein Ton wahrnehmbar ist. Die zugehörige Frequenz bzw. die Schichtdicke kann direkt abgelesen werden. Bei diesem Verfahren hat der bei Resonanz auftretende Ton allein für die Schichtdickenkontrolle keine Aussagekraft. Ferner, wenn die Schichtdicke auf grösseren Flächen oder Strecken geprüft werden muss, kann der Prüfer bei den bekannten Verfahren nur einen Eindruck vom Ergebnis bekommen, wenn er lau-fend den Oszillographenschirm, sonstige An-zeigeinstrumente oder eine Schreibaufzeichnung

beobachtet. Für schnelle Routineinspektionen sind diese Verfahren zu aufwendig.

Aus der US-Patentschrift 3 140 461 ist ein Verfahren zur Messung des Ortes von Gegenständen in flüssigen Medien bekannt, das nach dem Echo-effekt mit frequenzmoduliertem Sendesignal ar-beitet. Dazu werden zwei elektroakustische Wandler verwendet, von denen der eine als Sender und der andere als Empfänger wirkt. Die Frequenzdifferenz des empfangenen Signals zum ausgesendeten Signal ist ein Mass für die Lage bzw. den Abstand des festzustellenden Gegenstandes vom Sendeort. Da es sich dabei jedoch wegen der verwendeten Frequenzbandbreite um eine Vielzahl von Frequenzdifferenzsignalen handelt, wird nur ein schmaler Frequenzbandabschnitt über entsprechende Frequenzfilter in einer visuellen oder hörbaren Anzeige ausgewertet. Dieses Verfahren ist nicht für Schichtdickenmessungen geeignet.

In der US-Patentschrift 3 148 536 wird eine Dik-kenmessanordnung nach dem Ultraschallreso-nanzverfahren mit einem elektroakustischen Wandler beschrieben, der sowohl als Sender als auch als Empfänger dient. Diese Anordnung ist zur Messung von einseitig zugänglichen Materialschichten gedacht. Frequenzmodulierte Signale werden hierbei einerseits dem Wandler und andererseits über eine Integrationseinheit und einen Verstärker einer Kathodenstrahlröhre zugeführt. Dem Frequenzgenerator ist ein Sweepgenerator zugeordnet, der ebenfalls mit der Kathodenstrahlröhre verbunden ist. Der Frequenzgenerator wobbelt zyklisch mit einem vorbestimmten Frequenzbereich bei einer ebenfalls vorbestimmten Wiederholrate. Als Kopplungsmittel zwischen dem zu messenden Objekt und dem Wandler wird eine Flüssigkeitssäule, z.B. eine Wassersäule, verwendet. Die Resonanzschwingungen des Wassers und des zu messenden Materials werden auf der Kathodenstrahlröhre sichtbar angezeigt, die eine Dickenskala aufweist. Durch die unterschiedlichen Amplituden der Resonanzschwingungen kann die Dicke des zu messenden Materials abgelesen werden. Um die Resonanzschwingungen des Objekts und der Wassersäule erkennen zu können, muss die Wassersäule relativ lang, und zwar mindestens 2,54 cm lang sein. Auch diese Anordnung ist wegen der Wassersäule nicht praktikabel und wegen ihres Aufbaus auch nicht für die Messung dünner Schichten geeignet.

Auch das aus Elektroniker Jg. 25, Nr. 5/1976, Seiten EL 20–24 bekannte, oben erwähnte Verfahren bezieht sich auf die Auswertung von Resonanzschwingungen des Objektes und einer Wassersäule und verwendet ein dichtes Band von Wasser-Resonanz-Linien, die an den Stellen der Objekt-Resonanzen mehr oder weniger tiefe Einbuchtungen erfahren. Mit diesem Verfahren können nur Schichtdicken bei Materialien gemessen werden, die oben auf die senkrecht angeordnete Messanordnung mit der Wassersäule aufbringbar sind. Schichten an beliebig geformten Gegenständen, die nicht auf die Wasseroberfläche der Messanordnung aufbringbar sind, können nicht gemessen oder kontrolliert werden.

Der vorliegenden Erfindung liegt daher die Aufgabe zugrunde, eine laufende Überwachung und Kontrolle auch sehr dünner Schichten bis herunter zu einigen Mikrometern ohne manuelle Nachjustierung der Prüfgeräte zu ermöglichen. Dabei soll dem Prüfer die Dickenänderung insbesondere bei verdeckten Schichten direkt anhand von Periodizitäten im Frequenzspektrum oder als Höreindruck vermittelt werden. Ferner soll das Verfahren auch eine Aussage über die Oberflächenstruktur, z.B. die Rauhigkeit der Schichten, erlauben.

Es hat sich nun gezeigt, dass sich diese Aufgabe mit dem Verfahren gemäss Anspruch 1 lösen lässt.

Es hat sich herausgestellt, dass sich bei festgelegter Modulationsfrequenz des Ultraschall-Sendesignals eine eindeutige und feste Zuordnung der Wiederholungsfrequenz der Minima und Maxima des Interferenzsignals und der zu messenden bzw. zu kontrollierenden Schichtdicke ergibt. Mit wachsender Schichtdicke nimmt die Wiederholungsfrequenz zu.

Gemäss einer bevorzugten Variante des erfindungsgemässen Verfahrens wird zur Erzeugung einer frei wählbaren, unten genauer beschriebenen Arbeitstiefe, d.h. einer Schichtdicke bzw. eines Grenzschichtabstandes, für die/den ein verwertbares demoduliertes Signal erzeugt wird, das Ultraschall-Sendesignal zeitlich verzögert und mit dem durch Überlagerung der an den Grenzschichten teilreflektierten Signale entstehenden und vom Ultraschallwandler empfangenen Interferenzsignal multiplikativ gemischt. Nach diesem Verfahren lässt sich insbesondere die Oberflächenbeschaffenheit von Schichten feststellen, die von aussen nicht zugänglich sind.

Eine Vorrichtung zur Ausführung des erfindungsgemässen Verfahrens ist in Anspruch 3 definiert.

Vorteilhafte Ausführungsformen der Vorrichtung zur Ausführung des erfindungsgemässen Verfahrens sind in den abhängigen Ansprüchen 4 und 5 gekennzeichnet.

Nach dem erfindungsgemässen Verfahren werden durch Teilreflexion an den Grenzschichten erzeugte, periodisch wiederkehrende Interferenzeffekte beobachtet. Die in der Amplitudenmodulation enthaltene Dickeninformation wird mit einer elektrischen Einrichtung oder gegebenenfalls mit dem Gehör ausgewertet. Das Verfahren basiert auf folgenden theoretischen Überlegungen:

Das in die zu messende bzw. zu kontrollierende Schicht eingeschaltete Signal, d.h. das Ultraschall-Sendesignal, und die an den Schichtgrenzen reflektierten Signale interferieren miteinander. Die Laufzeitdifferenz $\tau$ beim Grenzschichtabstand d beträgt

$$\tau = 2\,d/c,$$

mit c als Schallgeschwindigkeit. Verändert man die Frequenz F des Ultraschall-Sendesignals, so erhält man ein charakteristisches Interferenzmuster, bei dem periodisch auftretende Pegelveränderungen erscheinen. Der zwischen zwei benachbarten Maxima bzw. Minima liegende Abstand wird als Frequenzabstand bzw. Interferenzabstand Q bezeichnet und nach folgender Gleichung berechnet:

$$Q = 1/\tau.$$

Verwertet man ein linear frequenzmoduliertes Signal als Ultraschall-Sendesignal, einen sogenannten Sweep, mit der Modulationsrate m

$$m = B/T,$$

wobei B die Sweephöhe bzw. den Wobbelhub und T die Wobbelperiode bedeutet, so beträgt die Zahl f der pro Sekunde überstrichenen Frequenzzyklen

$$f = m\tau.$$

Durch geeignete Wahl der Modulationsrate m kann man f in den Hörfrequenzbereich legen. Die Umsetzung des Interferenzabstandes in die Zahl f der pro Sekunde überstrichenen Frequenzzyklen wird als Abstands- oder Tiefencodierung bezeichnet. Die Empfindlichkeit b der Tiefencodierung beträgt

$$b = \Delta f/\Delta d = 2\,m/c.$$

Bei hoher Empfindlichkeit wird bereits mit geringen Schichtdickenänderungen ein vorgegebenes Frequenzintervall, z.B. der Messbereich eines Analysators überstrichen. Dadurch wäre ohne weitere Massnahmen der Arbeitsbereich des Verfahrens auf geringe Schichtdicken beschränkt. Kommt es aber nur darauf an, die Abstandsänderungen einer Schichtgrenze festzustellen, so kann man nach der folgenden Methode eine frei wählbare Arbeitstiefe $d_0$ einstellen. Hierzu verschiebt man das als Referenzsignal dienende eingeschaltete Signal, das Ultraschall-Sendesignal, mit einer Verzögerungseinheit zeitlich um den Betrag $\tau_0$. Damit wird die Arbeitstiefe $d_0$

$$d_0 = c\tau_0/2$$

aufgrund der konstanten zeitlichen Verschiebung um $\tau_0$ durch die Frequenz von 0 Hz codiert.

Für eine Dickenmessung von Material, in dem die Schallgeschwindigkeit c = 3000 m/s beträgt, muss man bei einer Arbeitstiefe von $d_0$ = 6 mm und einer Empfindlichkeit von b = 500 Hz/mm die Modulationsrate auf

$$m = cb/2 = 750 \cdot 10^6 s^{-2}$$

bei einer Verzögerung von

$$\tau_0 = 2\,d_0/c = 4 \cdot 10^{-6}s$$

einstellen. Bei einer Begrenzung des Messbereichs, z.B. durch ein Tiefpassfilter, auf 5 kHz, liegt dann der Tiefenmessbereich zwischen 6 mm und 16 mm. Die erforderliche Sweeprate kann z.B. durch ein periodisch linear von 5 MHz auf 2 MHz abfallendes Ultraschall-Sendesignal mit einer Sweeprate von 4 ms realisiert werden. Der Linienabstand im Frequenzspektrum beträgt dann 250 Hz.

Infolge der bekannten Material- und Temperaturabhängigkeit der Schallgeschwindigkeit kann die erfindungsgemässe Vorrichtung für Absolutmessungen kalibriert werden. Die Schichtdicke

$$d = fc/2 m$$

erhält man durch die Multiplikation der Wiederholungsfrequenz f des Interferenzmusters mit dem Eichfaktor c/2 m. Die beiden Faktoren werden durch Spannungswerte dargestellt und mit einer geeigneten Einheit multipliziert. Der Eichfaktor wird mit einer Skala eingegeben oder in einer Referenzmessung eingestellt. Dazu wird die Anzeige beim Messen einer bekannten Schichtdicke des zu prüfenden Materials durch Verstellen einer Kalibriereinheit auf den richtigen Wert einjustiert.

Bei sehr dünnen Schichten kann der Interferenzabstand so gross werden, dass die Wandlerbreite bzw. die bei einem Prüfkopf erreichbare Frequenzbandbreite, für das Überstreichen mehrerer Interferenzperioden nicht mehr ausreicht. Bei einer Schallgeschwindigkeit von c = 3000 m/s beträgt der Interferenzabstand einer 0,1 mm dikken Schicht z.B. 15 MHz. Dieses Frequenzband kann mit technisch üblichen Wandlern nicht mehrfach überstrichen werden. Erfindungsgemäss wird mit dem Sendesignal nur ein Teilbereich des Interferenzabstandes bzw. -musters periodisch überstrichen. Die Wiederholrate wird in den unteren Teil des Analysatormessbereichs, z.B. auf 1 kHz gelegt. Die interferenzbedingte Amplitudenmodulation stellt dann im kHz-Rhythmus aneinandergereihte Segmente des Interferenzmusters für das zu messende Objekt dar. Das Frequenzspektrum der Amplitudenmodulation enthält die Grundfrequenz, in dem gewählten Beispiel 1 kHz und Harmonische bzw. Oberwellen. Liegt die Mittenfrequenz des Prüfsignals, also des eingestrahlten Ultraschall-Sendesignals, an einem definierten Punkt der Interferenzkurve, z.B. im Maximum, so hängt das im folgenden als Oberwellenverhältnis bezeichnete Verhältnis der Oberwellenamplituden zur Grundfrequenzamplitude nur von der Bandbreite und von dem Interferenzabstand, also der Dicke der Schicht ab. Aus dem Oberwellenverhältnis und der eingestellten Bandbreite kann man also eindeutig auf die Schichtdicke schliessen. Das Oberwellenverhältnis kann sowohl mit dem Gehör als auch gerätetechnisch, z.B. durch eine Analyseeinrichtung, die beispielsweise als Nachlauf- bzw. Mitlauffilter oder als Fourieranalysator ausgebildet ist, bestimmt werden. Die verwendete Bandbreite ist aus der Einstellung des Sweepgenerators bekannt. Zur Bestimmung der Schichtdicke nach dieser Oberwellenmethode wird zuerst ein Ultraschall-Sendesignal mit schmalem Frequenzband auf die zu messende bzw. zu prüfende Schicht gerichtet und ein Interferenzmaximum aufgesucht. Dann wird die Bandbreite so lange erhöht, bis ein vorbestimmtes Oberwellenverhältnis erreicht ist. Aus der Bandbreite ist die Schichtdicke ableitbar. Für Absolutmessungen wird der Kehrwert dieser Bandbreite mit einem konstanten Faktor multipliziert, der, wie bereits oben dargelegt, mit einer Eichmessung eingestellt werden kann.

Bei gegebener Schichtdicke und fest eingestellter Bandbreite ist also ein bestimmtes Oberwellenverhältnis gegeben. Dieses ändert sich bei Veränderungen der Schichtdicke und wird, wenn der Messbereich im Hörfrequenzbereich liegt, als Klangänderung wahrgenommen. Für Routineinspektionen ist es daher sinnvoll, einen bestimmten Klang einzustellen und die Klangänderung zu überwachen.

Die nach der vorliegenden Erfindung durchgeführten Schichtdickenmessungen erlauben die dynamische Messung und Kontrolle von Schichtdikken mit Frequenzanalysatoren oder dem Gehör und erleichtern damit den Prüfvorgang. Veränderungen der Schichtdicke können insbesondere leicht erkannt werden. Anzeige und Dokumentation der Prüfergebnisse sind ebenfalls gesichert. Im Gegensatz zur Laufzeitmethode ist hier die Überlagerung von Teilechos Bestandteil des Verfahrens. Daher ist auch die Messung sehr geringer Schichtdicken möglich, wobei die allgemeinen Vorzüge der Ultraschallprüfung gewahrt bleiben.

Weitere Einzelheiten, Vorteile und Anwendungsmöglichkeiten der Erfindung gehen aus der folgenden Beschreibung anhand der beigefügten Zeichnungen hervor.

Es zeigen in schematischer Vereinfachung:

Fig. 1 ein Diagramm zur Wahl eines zweckmässigen Frequenzbandes bei der erfindungsgemässen Oberwellenmethode;

Fig. 2 ein Blockschaltbild eines Teils einer Ausführungsform der erfindungsgemässen Vorrichtung mit einer Verzögerungseinheit;

Fig. 3 ein Blockschaltbild einer weiteren Ausführungsform, in der eine Kalibriereinheit vorgesehen ist, und

Fig. 4 ein Blockschaltbild einer Ausführungsform und eine prinzipielle Anordnung eines Regelkreises zur Dickenbestimmung nach dem Oberwellenverhältnis.

Erfindungsgemäss wird also eine Ultraschallprüfeinrichtung mit periodisch frequenzmoduliertem Dauersignal verwendet und durch Demodulation des Überlagerungssignals die Schichtdicke in ein in der Zeit periodisch wiederkehrendes Muster umgesetzt. Bei zunehmender Schichtdicke wird die Periode des Musters kürzer, bei abnehmender Schichtdicke länger. Bei dünnen Schichten, deren Frequenzcode, d.h. das Muster des Frequenzverlaufs, in der Nähe oder unterhalb der Modulationsfrequenz des Ultraschall-Sendesignals liegt, fällt die Wiederholungsfrequenz des Interferenzmusters einschliesslich der Oberwellen in den Analysebereich, wobei der Oberwellengehalt mit der Schichtdicke wächst.

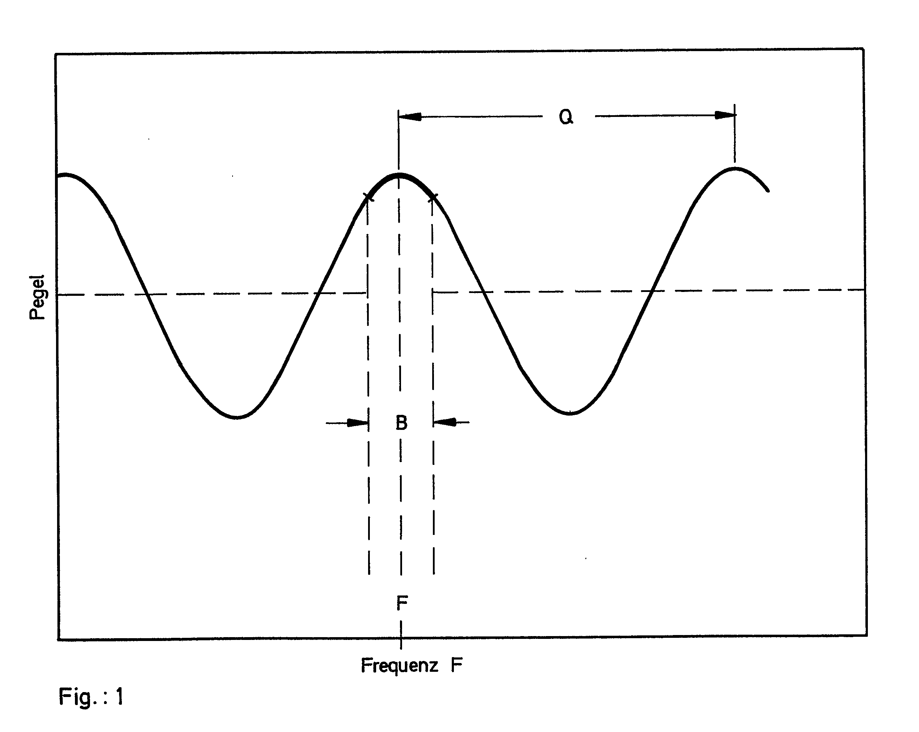

In Fig. 1 wird die Mittenfrequenz des frequenzmodulierten Ultraschall-Sendesignals auf ein Interferenzmaximum gelegt und die Bandbreite B so weit eingestellt, dass Oberwellen in das Analysefrequenzband fallen. Q bezeichnet den Frequenzabstand zweier benachbarter Interferenzmaxima. Die Mittenfrequenz kann auch auf ein Interferenzminimum gelegt werden.

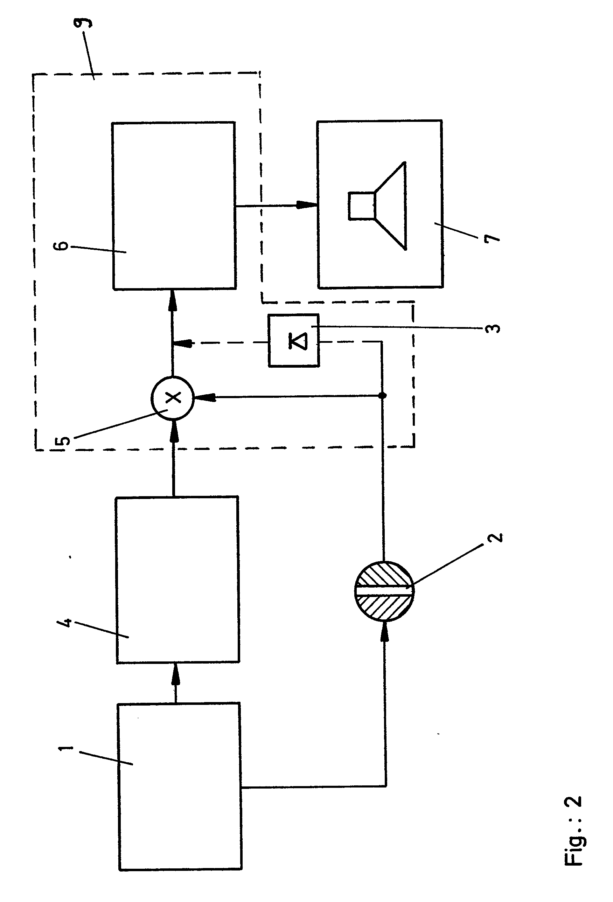

Gemäss Fig. 2 wird das von einem Sweep-Generator 1 mit einstellbarer Bandbreite und einstellbarer Modulationsfrequenz erzeugte Signal, das Ultraschall-Sendesignal, auf den als elektroakustischer Wandler ausgebildeten Prüfkopf 2 gegeben. Das am Empfangswandler des Prüfkopfs 2 entstehende Signal wird entweder mittels eines Gleichrichters 3 direkt gleichgerichtet oder mit dem in einer Verzögerungseinheit 4 um eine vorwählbare Zeit verschobenen Ultraschall-Sendesignal mittels einer als multiplikativer Mischer 5 ausgelegten Multipliziereinheit multipliziert und nach Filterung in einem Tiefpass 6 auf einen Audiomonitor 7, eine akustische Anzeige, geleitet. Die Analyseeinheit ist in dieser Figur nicht dargestellt.

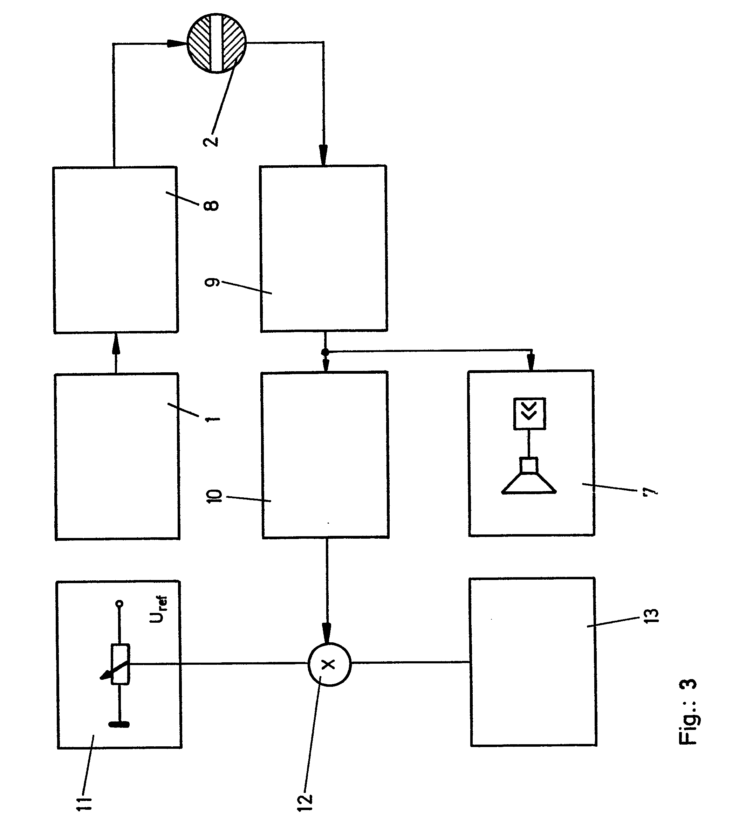

Bei der in Fig. 3 gezeigten Ausführungsform werden ein Sweepgenerator 1, ein Verstärker 8, ein Prüfkopf 2, ein als Demodulationseinheit wirkender Amplitudenmodulator 9 und ein Audiomonitor 7 verwendet. Zusätzlich sind ein Frequenzmessgerät 10, eine Kalibriereinrichtung 11 sowie ein Multiplizierer 12 vorgesehen. Eine an sich bekannte Dickenanzeige 13, wie z.B. eine Skala, ein Ausdruck oder ein Schreiberstreifen, wird über den Multiplizierer 12 angesteuert. Anstelle des Ampliduden-Demodulators 9 können auch ein Gleichrichter oder ein Multiplizierer und ein Tiefpassfilter gemäss Fig. 2 verwendet werden.

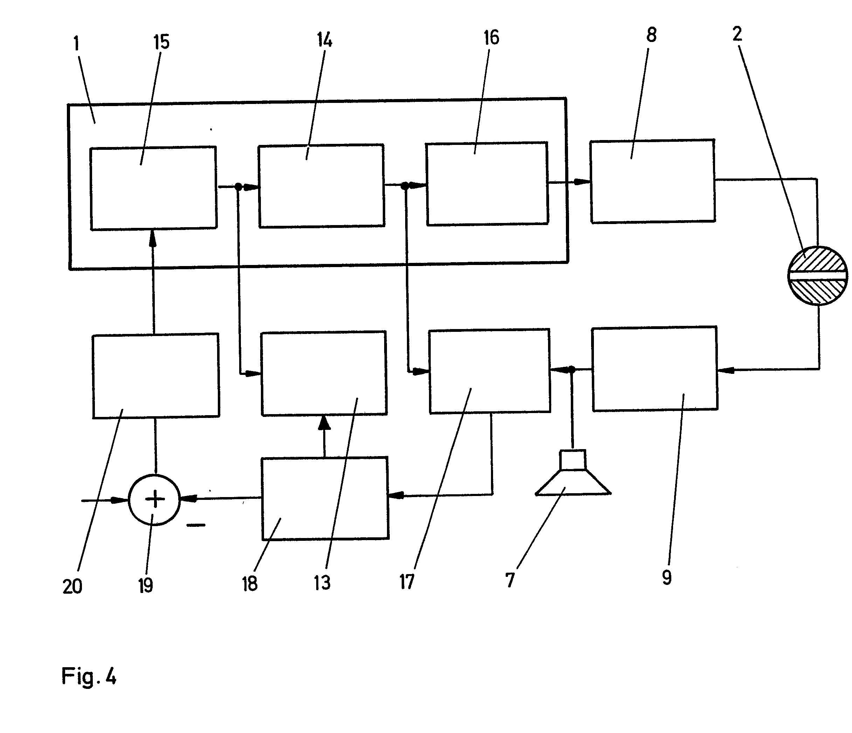

Die in Fig. 4 gezeigte Anordnung ist für die Schichtdickenmessung mit Oberwellenanalyse geeignet. Der Sweep-Generator 1 wird vorzugsweise durch Hintereinanderschaltung einer regelbaren Spannungsquelle 15, eines amplitudengesteuerten Sägezahngenerators 14 und eines spannungsgesteuerten Oszillators 16 realisiert. Die Bandbreite des Ausgangssignals des Sweep-Generators 1 wird durch Vorgabe der Sägezahnamplitude des Sägezahngenerators 14 mittels einer Referenzspannung der regelbaren Spannungsquelle 15 eingestellt. Die Modulationsfrequenz des Ausgangssignals des Sweep-Generators 1, d.h. des Ultraschall-Sendesignals, wird am Sägezahngenerator 14, dessen Mittenfrequenz am Oszillator 16 und der Prüfsignalpegel, d.h. der Pegel des Ultraschall-Sendesignals, am Verstärker 8 eingestellt. Der Prüfkopf 2, der Amplitudendemodulator 9 und der Audiomonitor 7 entsprechen den oben beschriebenen Ausführungsformen. Mit einem als Analyseeinheit wirkenden Nachlauf- bzw. Mitlauffilter 17 und einer Einheit 18 zur Messung des Oberwellenverhältnisses werden die Amplituden der Grundschwingung und der Oberwellen bzw. der Harmonischen des modulierten Signals ermittelt. Die Bandbreite und das Oberwellenverhältnis werden mit der Dickenanzeige 13 dargestellt. In dieser Ausführungsform wird die manuelle Einstellung der Bandbreite ersetzt durch eine Regeleinheit, bei der in einer als Sollwertvergleichsstufe wirkenden Subtrahierstufe 19 das Oberwellenverhältnis mit einem Sollwert verglichen und die Differenz über einen Integrator 20 zur Bandbreiteneinstellung zurückgeführt wird. Der Regelkreis stellt selbsttätig das vorgegebene Oberwellenverhältnis ein.

Das in Fig. 4 gezeigte Gerät ist besonders für den Einsatz in der Suchtechnik geeignet, weil Abweichungen im Oberwellenverhältnis von einem zuvor an einer Referenzschicht eingestellten Wert mit dem Gehör und der elektronischen Analyseeinrichtung leicht zu entdecken sind.

## Patentansprüche

1. Verfahren zur Dickenkontrolle und -messung von einseitig oder nicht von aussen zugänglichen Materialschichten, bei dem ein kontinuierliches, frequenzmoduliertes Ultraschall-Sendesignal, das periodisch ein Frequenzband überstreicht, in die zu messende Schicht übertragen wird und das durch Interferenz der an beiden Oberflächen der Schicht teilreflektierten Signale entstehende Interferenzsignal demoduliert und bezüglich der Amplitude ausgewertet und dann akustisch und/oder optisch angezeigt wird, dadurch gekennzeichnet, dass das Frequenzband zur Erzeugung von Oberwellen schmal gewählt wird, wobei die Breite des Frequenzbandes so eingestellt wird, dass es nur einen Teil der Periode des Interferenzsignals überdeckt, dass die Amplituden der im demodulierten Interferenzsignal enthaltenen Oberwellen zur Erzeugung von Oberwellenverhältnissen zur Amplitude der Grundschwingung des demodulierten Interferenzsignals ins Verhältnis gesetzt werden, wobei das Oberwellenverhältnis bei gegebener Breite des Frequenzbandes ein Mass für die zu messende bzw. zu kontrollierende Schichtdikke ist, und dass die Modulationsfrequenz des frequenzmodulierten Ultraschall-Sendesignals derart eingestellt wird, dass das ausgewertete demodulierte Interferenzsignal im hörbaren Frequenzbereich liegt.

2. Verfahren nach Anspruch 1, dadurch gekennzeichnet, dass das Ultraschall-Sendesignal zeitlich verzögert und zur Amplitudendemodulation des Interferenzsignales mit diesem multiplikativ gemischt wird.

3. Vorrichtung zur Ausführung des Verfahrens nach Anspruch 1 oder 2, mit einem aus einem elektroakustischen Sende- und Empfangswandler bestehenden Prüfkopf (2), einem Sweep-Generator (1) mit schmal einstellbarer Bandbreite und einstellbarer Modulationsfrequenz, einer Amplitudendemodulationseinheit (9) für das empfangene, durch Interferenz der an den beiden Oberflächen der zu kontrollierenden bzw. zu messenden Materialschicht teilreflektierten Signale entstandene Interferenzsignal und einer akustischen und/oder optischen Anzeige (7, 13), gekennzeichnet durch eine Analyseeinheit (17), mit der die Amplituden der Oberwellen des in der Amplitudendemodulationseinheit (9) demodulierten Interferenzsignals und die Amplitude der Grundschwingung des demodulierten Interferenzsignals ermittelt werden, durch eine Einheit (18) zur Messung der Verhältnisse der jeweiligen Amplituden der Oberwellen des demodulierten Interferenzsignals zur Amplitude der Grundschwingung des demodulierten Interferenzsignals und durch eine mit der Einheit (18) verbindbare Dickenanzeige (13).

4. Vorrichtung nach Anspruch 3, dadurch gekennzeichnet, dass zur Einstellung eines gewünschten Oberwellenverhältnisses eine aus einem Sollwertvergleicher (19) und einem Integrator (20) bestehende Regeleinheit mit dem Sweep-Generator (1) verbunden ist und dass der Sweep-Generator (1) eine regelbare Spannungsquelle (15) aufweist, deren Ausgangssignal der Dickenanzeige (13) zuführbar ist.

5. Vorrichtung nach einem der Ansprüche 3 oder 4, dadurch gekennzeichnet, dass zwischen dem Sweep-Generator (1) und der akustischen und/oder optischen Anzeige (7, 13) eine Verzögerungseinheit (4) sowie ein multiplikativer Mischer (5) vorgesehen sind.

## Claims

1. Method of controlling and measuring the thickness of material layers that are accessible from one side or not from outside, wherein a continuous, frequency-modulated ultrasonic transmitted signal, which periodically scans a frequency band, is transmitted into the layer to be measured, and wherein the interference signal that is generated by interference of the signals partly reflected at the two surfaces of the layer is demodulated and evaluated with respect to its amplitude and thereafter indicated acoustically and/or optically, comprising: selecting a narrow frequency band for generating harmonics, the width of the frequency band being adjusted such that it covers only part of the period of the interference signal; in order to generate harmonic ratios, forming the ratio between the amplitudes of the harmonics contained in the demodulated interference signal and the amplitude of the first harmonic of the demodulated interference signal, the harmonic ratio at a given width of the frequency band being a measure of the layer thickness that is to be measured or controlled; and adjusting the modulation frequency of the frequency-modulated ultrasonic transmitted signal such that the evaluated demodulated interference signal is in the audible frequency range.

2. Method as claimed in Claim 1 wherein the ultrasonic transmitted signal is delayed and, in order to demodulate the amplitude of the interference signal, multiplicatively mixed with the interference signal.

3. Device for carrying out the method as claimed in Claim 1 or Claim 2, with a probe head (2) consisting of an electroacoustic transmitter and receiver transducer, with a sweep generator (1) of narrow adjustable bandwidth and adjustable modulation frequency, with an amplitude demodulation unit (9) for the received interference signal, which is generated by interference of the signals partly reflected at the two surfaces of the material layer that is to be controlled or measured, and with acoustic and/or visual indicators (7, 13), comprising an analyzer (17) by means of which the amplitudes of the harmonics of the interference signal demodulated in the amplitude demodulation unit (9) and the amplitude of the first harmonic of the demodulated interference signal are determined; comprising a unit (18) for measuring the ratios of the respective amplitudes of the harmonics of the demodulated interference signal to the amplitude of the first harmonic of the demodulated interference signal; and comprising a thickness indicator (13) that can be connected with the unit (18).

4. Device as claimed in Claim 3, wherein, in order to adjust a desired harmonic ratio, a control unit consisting of a substraction unit (19) and an integrator (20) is connected with the sweep generator (1); and wherein the sweep generator (1) is provided with an adjustable voltage source (15) whose output signal can be fed to the thickness indicator (13).

5. Device as claimed in any of the Claims 3 or 4 wherein a delay unit (4) and a multiplicative mixer (5) are provided between the sweep generator (1) and the acoustic and/or visual indicators (7, 13).

## Revendications

1. Procédé pour contrôler et mesurer l'épaisseur de couches de matière accessibles d'un côté ou non de l'extérieur, procédé selon lequel un signal d'émission à ultra-sons à modulation de fréquence, continu, qui balaie périodiquement une bande de fréquence est appliqué à la couche à mesurer et selon lequel le signal d'interférence généré par l'interférence des signaux, partiellement réfléchi par les deux faces de la couche, est démodulé et est examiné quant à son amplitude, puis est affiché de manière acoustique et/ou optique, procédé caractérisé en ce qu'on choisit une bande de fréquence étroite pour générer des signaux harmoniques, la largeur de la bande de fréquence étant réglée de façon qu'elle ne couvre qu'une partie de la période du signal d'interférence; on génère les rapports des harmoniques en formant le rapport entre l'amplitude des harmoniques contenues dans le signal d'interférence démodulé et l'amplitude de la première harmonique du signal d'interférence démodulé, le rapport harmonique pour une certaine largeur de la bande de fréquence constituant une mesure de l'épaisseur de la couche à mesurer ou à contrôler et on règle la fréquence de modulation du signal à ultra-son, à modulation de fréquence, transmis, de façon que le signal d'interférence démodulé, examiné se trouve dans la plage des fréquences audibles.

2. Procédé selon la revendication 1, caractérisé en ce que le signal d'émission à ultra-sons est temporisé et est mélangé par multiplication au signal d'interférence pour la démodulation en amplitude.

3. Dispositif pour la mise en œuvre du procédé selon la revendication 1 ou 2 à l'aide d'une tête de contrôle (2) comprenant un convertisseur électroacoustique d'émission et de réception, un générateur de balayage (1) à faible largeur de bande, réglable, et à modulation de fréquence, réglable, une unité de démodulation d'amplitude (9) pour recevoir le signal d'interférence formé à partir des signaux de réflexion partielle sur les deux faces de la couche de matière à contrôler ou à mesurer, ainsi qu'un moyen d'affichage acoustique et/ou optique (7, 13), dispositif caractérisé par un analyseur (17) qui détermine l'amplitude des harmoniques du signal d'interférence démodulé fourni par le démodulateur d'amplitude (9) et l'amplitude de la première harmonique du signal d'interférence, démodulé; une unité (18) pour mesurer le rapport des amplitudes respectives des harmoniques du signal d'interférence démodulé par rapport à l'amplitude de la première harmonique du signal d'interférence démodulé; et un indicateur d'épaisseur (13) qui peut être relié à l'unité (18).

4. Dispositif selon la revendication 3, caractérisé en ce qu'une unité de commande, formée d'un soustracteur (19) et d'un intégrateur (20) reliés au générateur de balayage (1) pour régler un rapport d'harmoniques, et le générateur (1) comporte une source de tension réglage (15) dont le signal de sortie peut être appliqué à l'indicateur d'épaisseur (13).

5. Dispositif selon l'une quelconque des revendications 3 ou 4, caractérisé en ce que l'unité de retard (4) et le mélangeur par multiplication (5) sont montés entre le générateur à balayage (1) et les moyens d'affichage acoustiques et/ou optiques (7, 13).

Fig.: 1

Fig.: 2

0 062 272

Fig.: 3

Fig. 4